# EUROPÄISCHE PATENTSCHRIFT

(11) **EP 1 970 268 B1**
(45) Veröffentlichungstag und Bekanntmachung des Hinweises auf die Patenterteilung: **15.02.2012**
(21) Anmeldenummer: 08004148.6
(22) Anmeldetag: 06.03.2008
(51) Int. Cl.: B60S 1/38

(54) **Wischerblatt für einen Scheibenwischer**
Wiper blade for a windscreen wiper
Balais d'essuie-glace pour un essuie-glace

(30) Priorität: 10.03.2007 DE 102007011732
(43) Veröffentlichungstag der Anmeldung: 17.09.2008
(73) Patentinhaber: Volkswagen, 38436 Wolfsburg (DE)
(72) Erfinder: Fangmeier, Wilhelm, 38442 Wolfsburg (DE)

(56) Entgegenhaltungen:
- EP-A2- 1 719 672
- DE-A1-102005 009 205
- DE-U1- 9 104 461
- FR-A1- 2 868 747

## Beschreibung

Die Erfindung betrifft ein Wischerblatt für einen Scheibenwischer an einem Fahrzeug, insbesondere ein haltebügelloses/ gelenkfreies Wischerblatt für die Frontscheibe des Fahrzeugs.

Hältebügellose Wischerblätter bestehen im Wesentlichen aus einer aus einem gummielastischen Material gefertigten langgestreckten Wischleiste, die üblicherweise ein mit seitlichen Längsnuten versehenes Oberteil und ein mit diesem über zumindest einen Kippsteg verbundenes Unterteil mit einer Wischlippe aufweist, und einem mit der Wischleiste verbundenen und gegenüber der Scheibe konkav gekrümmter, federelastischen Tragelement. Dieses kann aus zwei parallelen Federschienen gebildet sein, die in den im Oberteil ausgebildeten Längsnuten angeordnet sind, oder auch aus einer bandartigen Federschiene, die in einem das Oberteil im wesentlichen U-förmig umschließenden Windleitprofil angeordnet ist, das wischleistenseitig offen ist und mit nach dem Oberteil zu abgewinkelten Schenkeln jeweils in eine Längsnut eingreift, wie es beispielsweise in der DE 10 2005 009 205 A1 beschrieben ist.

Bei einem in der DE 44 42 529 beschriebenen Wischerblatt ist das Tragelement ein steifes, im Wesentlichen U-förmiges Hohlprofil, insbesondere aus einem harten Kunststoff, in das die Wischleiste eingeschoben ist, wobei das Hohlprofil eine mit den Krümmungsradius der Scheibe identische Krümmung aufweist. Das Hohlprofil ist scheibenseit g offen und weist an seinen beiden Schenkeln zwei waagerecht nach innen abragende Stege auf, die aufeinander zu weisen und als Haltestege für die Wischleiste dienen.

Bei einem in der WO 99/36300 beschriebenen Wischerblatt ist das Tragelement für die Wischleiste aus wenigstens einer bandartig langgestreckten, metallischen und zur Scheibenoberfläche konkav gekrümmten elastischen Federschiene gebildet, deren Krümmung größer als die der Scheibe ist und die zumindest abschnittsweise lose in einem scheibenseitig offenen Kunststoff-Profil angeordnet ist, das an seinen beiden Schenkeln jeweils waagerecht nach innen gerichtete stegartige Krallen als Haltemittel für die Wischleiste aufweist.

Beim Betreiben des jeweiligen Scheibenwischers wird die Wischlippe um den zumindest einen Kippsteg nach der jeweiligen Rückseite des über die Fahrzeugscheibe hin- und herbewegten Wischerblattes gekippt und am Bewegungs-Umkehrpunkt des Scheibenwischers nach der jeweils anderen, nun die Rückseite bildenden Seite umgelegt. Dieses Umlegen oder auch Umschnappen der Wischlippe ist mit einer störenden Geräuschentwicklung verbunden, die insbesondere durch ein Aufschlagen der jeweiligen Längskante des Unterteils auf die über dieser ausgebildeten Fläche des Oberteils im Bereich des Kippsteges hervorgerufen wird und einen hohen Geräuschpegel im Fahrzeug erzeugen kann.

Es sind schon geräuschgedämpfte Wischleisten, insbesondere für haltebügellose Wischerblätter, bekannt geworden, beispielsweise durch die DE 10 2005 009 205 A1 und die DE 10 2005 021 146 A1. Bei diesen sind in dem zwischen dem Oberteil, dem Unterteil und dem Kippsteg gebildeten Spalt Dämpfungsstege angeformt, die ein Anschlagen der jeweiligen Längskante des Unterteils auf die den Spalt mitbildende Fläche des Oberteils verhindern, zumindest jedoch erheblich dämpfen. Aus der DE 91 04 461 U1 ist es auch bekannt, zwischen dem Oberteil und dem Unterteil jeweils eine längserstreckte, das Querschnittsprofil der Wischleiste ergänzende und im spitzen Winkel zum Oberteil angeordnete Dämpfungsleiste vorzusehen, die verhindert, dass die Längskante des Unterteils auf die dieser zugewandte Fläche des Oberteils aufschlägt, sondern bewirkt, dass die Längskante zunächst gegen die Dämpfungsleiste schlägt, die elastisch nachgibt und in Richtung der Fläche des Oberteils energieverzehrend gebogen und bis zur Anlage "auf Block" an diese Fläche gedämpft geschlagen wird.

In Weiterentwicklung dazu ist schon vorgeschlagen worden, zwischen den jeweils im spitzen Winkel am Oberteil angeordneten Dämpfungsleisten, die ja mit dem Oberteil jeweils einen dreieckförmigen Deformationsraum für diese ausbilden, oberteilseitig eine Erweiterung dieses Deformationsraumes vorzusehen, indem das Oberteil zur Schaffung dieses erweiterten Deformationsraumes im Querschnitt auf der der Dämpfungsleiste zugewandten Seite konkav ausgebildet ist.

Es ist Aufgabe der Erfindung, ein Wischerblatt für einen Scheibenwischer nach dem Oberbegriff des Anspruchs 1 so zu gestalten, dass bei diesem die Umlegegeräusche beseitigt, zumindest jedoch erheblich reduziert sind.

Diese Aufgabe wird bei einem Wischerblatt nach dem Oberbegriff des Anspruchs 1 durch dessen kennzeichnenden Merkmale gelöst. Vorteilhafte Ausgestaltungen sind in den Unteransprüchen aufgeführt.

Die Erfindung betrifft ein Wischerblatt, das in bekannter Weise eine Wischleiste mit einem Oberteil mit seitlich an diesem ausgebildeten Längsnuten und ein mit diesem über einen Kippsteg verbundenes Unterteil mit einer Wischlippe zur Anlage an einer Fahrzeugscheibe, ein elastisches Tragelement und ein dieses aufnehmendes formstabiles Hohlprofil aufweist. Letzteres ist zur Verbindung mit der Wischleiste wischlippenseitig mit zwei Schenkeln versehen, die nach der Wischleiste zu abgewinkelt sind und mit den Abwinklungen jeweils in eine Längsnut eingreifen und kann auf der der Wischlippe abgewar dten Seite zu einem formstabilen Windleitprofil (Spoiler) geformt sein. Die Erfindung besteht nur darin, dass zwischen der jeweiligen Abwinklung und einer die jeweilige Längsnut wischlippenseitig begrenzenden Dämpfungsleiste im Querschnitt ein Deformationsraum für diese ausgebildet ist. Dieser Deformationsraum ermöglicht beim Betreiben des Scheibenwischers, dass die jeweilige Dämpfungsleiste in diesen hinein deformierbar ist und demzufolge Aufprallenergie aufnehmen kann, so dass der Aufschlag der der Dämpfungsleiste benachbarten Längskante des Unterteils auf diese gedämpft wird. Die Flexibilität des Unterteils wird dabei nicht verringert, ebenso nicht dessen Fähigkeit, die von einem Wischerarm eingebrachte Anoresskraft auf die Wischlippe zu übertragen.

Der Deformationsraum ist dabei an der jeweiligen Abwinklung und/ oder an der jeweiligen Dämpfungsleiste selbst ausgebildet . Auch bei letzterer Ausführung wird die Dämpfungsleiste deformiert und durch die Längskante des Unterteils zur Abwinklung zu deformiert, bevor sie an diese anschlägt. Der Deformationsraun wird auf einfache Weise durch eine längsnutseitige konkave Ausbildung der Abwinklung und/ oder der Dämpfungsleiste geschaffen. Zur konkaven Gestaltung der jeweiligen Querschrittsfläche kann längsnutseitig im Bereich der jeweiligen Außenkante ein längserstreckter Anlagesteg oder eine Anlagewulst für das andere Teil angeformt sein, durch den/ die ein in etwa dreleckiger Deformationsraum gebildet wird. Dieses Anlageelement kann auch aus einem Material mit einer wesentlich geringeren Shore-Härte als das Material der Wischleiste gebildet sein, vorzugsweise aus einem Material mit einer um die Hälfte geringeren Härte Shore A gegenüber dem Material der Wischleiste, insbesondere aus weichem EPDM, das beim Extrudieren der Wischleiste coextrudiert wird.

Vorteilhaft ist es auch, wenn die Dämpfungsleiste nach dem Unterteil zu geneigt angeformt ist und dabei mit dem Oberteil einen Winkel von vorzugsweise 15 bis 25° einschließt. Ein Aufschlag der Längskante des Unterteils auf die Dämpfungsleiste wird dadurch gedämpft, dass diese in Richtung der Abwinklung aufprallenergieverzehrend deformiert wird und ein Anschlag "auf Block" verhindert ist, verbunden mit einer Geräuschdämpfung.

Die Erfindung wird nachstehend anhand von Ausführungsbeispielen erläutert. In den zugehörigen Zeichnungen zeigen im Querschnitt:
- Fig. 1a:: ein Wischerblatt im Querschnitt mit einen Deformationsraum für eine Dämpfungsleiste in einer ersten Ausführung in der Nichtbetriebsstellung,
- Fig. 1b:: das Wischerblatt in einer Betriebsstellung,
- Fig. 2a:: eine alternative Ausführung des Deformationsraumes in der Nichtgebcauchsstellung des Wischerblattes,
- Fig. 2b:: die Deformation der Dämpfungsleiste bel dieser Ausführung in einer Betriebsstellung des Wischerblattes.
- Fig. 3a:: eine weitere alternative Ausführung des Deformationsraumes in der Nichtgebrauchsstellung des Wischerblattes und
- Fig. 3b:: die Deformation der Dämpfungsleiste bei dieser Ausführung in einer Betriebsstellung des Wischerblattes.

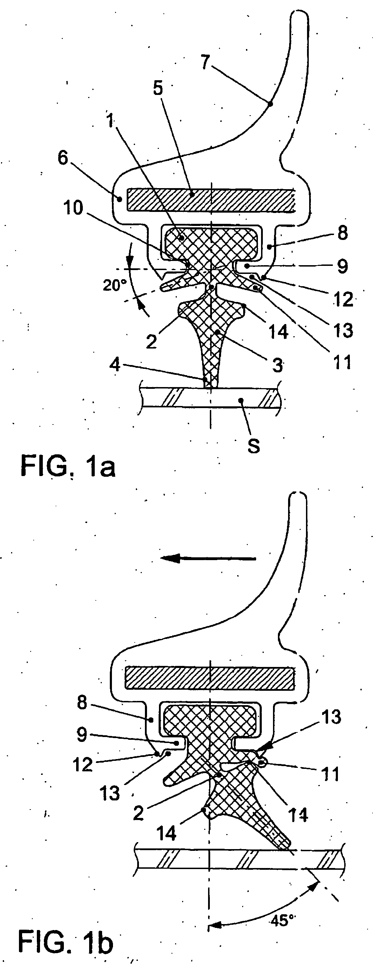

Das in den Fig. 1a und 1b gezeigte Wischerblatt weist eine Wischleiste aus Gummi mit.einem Oberteil 1 und einem über einen Kippsteg 2 mit diesem verbundenen Unterteil 3 mit einer Wischlippe 4 zur Anlage an einer Fahrzeugscheibe S, ein elastisch biegbares, zur Wischlippe zu konkaves Federstahl-Tragelement 5 und ein dieses (5) lose umschließendes formstabiles Hohlteil 6 auf, das auf der der Wischlippe 4 abgewandten Seite zu einem Windleitprofil 7 geformt ist. Am Hohlprofil 6 sind wischlippenseitig zwei Schenkeln 8 angeformt, die nach der Wischleiste zu um 90° abgewinkelt sind und mit diesen Abwinklungen 9 in am Oberteil 1 angeordnete Längsnuten 10 eingreifen und auf diese Weise die Wischleiste haltern. Die Längsnut 10 wird wischlippenseitig durch eine Dämpfungsleiste 11 begrenzt; die nach dem Unterteil 3 zu geneigt ist und dabei mit dem Oberteil 1 einen Winkel von im Wesentlichen 20° einschließt. An der jeweiligen Abwinklung 9 ist im Bereich deren Außenkante längsnutseitig ein Längserstreckter Anlagesteg 12 für die Dämpfungsleiste 11 zur Ausbildung einer gegenüber dieser (11) längserstreckten konkaven Mulde 13 als Deformationsraum angeformt.

Während des Betreibens des das Wischerblatt tragenden Scheibenwischers (nicht dargestellt) ist die Wischteiste nach der der Bewegungsrichtung (Pfeil) abgewandten Seite zu geneigt, was in Fig. 1b gezeigt ist. Diese Neigung beträgt im Bereich der Wischlippe 4 etwa 45° und ist im wesentlichen durch den Kippsteg 2 ermöglicht. Bei einer Bewegungsumkehr des Scheibenwischers schlägt das Unterteil 3 nach der entgegengesetzten Richtung um und schlägt mit der jeweiligen (in der Fig. linken) Längskante 14 an die Unterseite der jeweiligen Dämpfungsleiste 11 an, die dabei in Richtung der Mulde 13 energieverzehrend deformiert wird und dadurch den Aufschlag der Längskante 14 dämpft. Zunächst dient der Anlagesteg 12 als Anschlag für die Dämpfungsleiste 11. Nach dem Anschlagen an diesen (12) wird die Dämpfungsleiste 11 durch die Längskante 14 in die Mulde 13 gedrückt und somit weiter deformiert. Durch die energieverzehrende Deformation der Dämpfungsleiste wird das Auftreten eines Schlaggeräusches weitgehend verhindert, zumindest jedoch stark gedämpft.

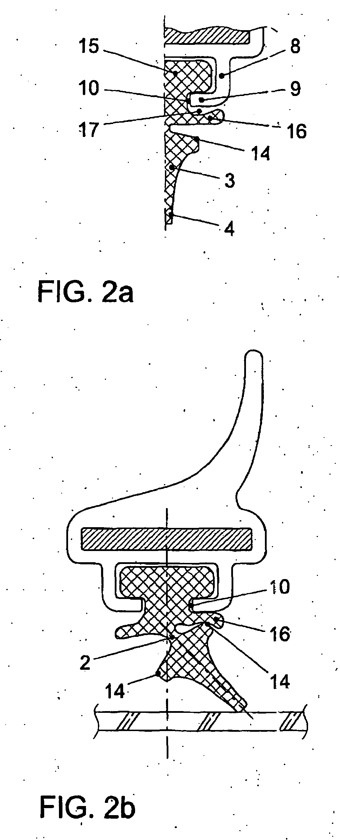

In den Fig. 2a und b ist ein Wischerblatt gezeigt, bei dem im Unterschied zu dem Wischerblatt nach Fig. 1 am Oberteil 15 der Wischleiste eine abwinklungsparallele Dämpfungsleiste 16 angeformt ist, an der auf der der Abwinklung 9 zugewandten Seite eine Mulde 17 als Deformationsraum für diese (16) ausgebildet ist, wie in Fig. 1a dargestellt ist. Fig. 2b zeigt, dass beim Anschlagen der Längskante 14 des Unterteils 3 an die Dämpfungsleiste 16 diese derart deformiert wird, dass diese (16) im Bereich der Mulde 17 energieverzehrend an die Abwinklung 9 gedrückt wird. Dadurch werden der Aufschlag der Längskante 14 auf die Dämpfungsleiste 16 abgeschwächt und das Schlaggeräusch gedämpft.

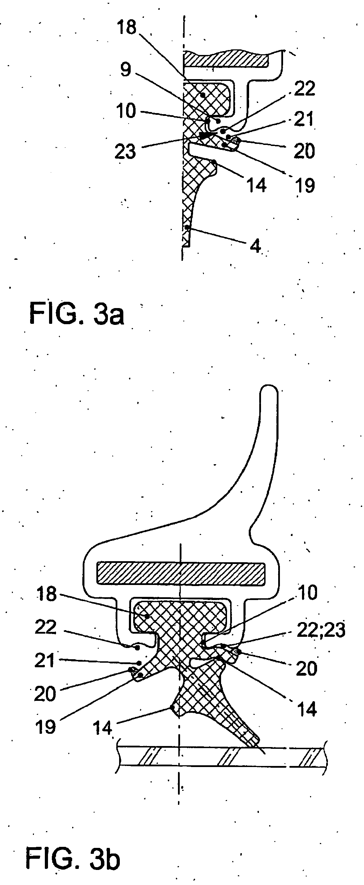

Bei der Ausführung eines Wischerblattes nach den Fig. 3a und 3b sind am Oberteil 18 Dämpfungsleisten 19 im Winkel von etwa 20° zu diesem angeformt. An diesen ist im Bereich deren jeweiliger Außenkante abwinklungsseitig eine Anlagewulst 20 aus EPDM mit einer Härte Shore-A von 60 anextrudiert, so dass eine Mulde 21 gebildet ist. Auch die Abwinklung 9 ist wischlippenseitig mit einer Mulde 22 versehen. Beide Mulden 21 und 22 bilden gemeinsam einen Deformationsraum 23 aus, in den die Dämpfungsleiste 19 beim Anschlagen der Anlagewulst 20 an die Außenkante der jeweiligen Abwinklung 9 energieverzehrend hineingedrückt wird.

### Bezugszeichenliste

- 1: Oberteil
- 2: Kippsteg
- 3: Unterteil
- 4: Wischlippe
- 5: Federstahlband
- 6: Hohlteil
- 7: Windleitprofil
- 8: Schenkel
- 9: Abwinklung
- 10: Längsnut
- 11: Dämpfungsleiste
- 12: Anlagesteg
- 13: Mulde
- 14: Längskante
- 15: Oberteil
- 16: Dämpfungsleiste
- 17: Mulde
- 18: Oberteil
- 19: Dämpfungsleiste
- 20: Anlagewulst
- 21: Mulde
- 22: Mulde
- 23: Deformationsraum

## Patentansprüche

1. Wischerblatt für einen Scheibenwischer, mit einer Wischleiste, einem federelastischen Tragelement und einem das Tragelement zumindest teilweise umschließenden formstabilen Hohlprofil, wobei die Wischleiste ein Oberteil mit Längsnuten, ein mit diesem zumindest über einen Kippsteg verbundenes Unterteil mit einer Wischlippe zur Anlage an einer Fahrzeugscheibe und wobei das Hohlprofil wischlippenseitig zwei Schenkel aufweist, die nach der Wischleiste zu abgewinkelt sind und mit den Abwinklungen jeweils in eine Längsnut eingreifen, wobei zwischen der jeweiligen Abwinklung (9) und einer die jeweilige Längsnut (10) wischlippenseitig begrenzenden Dämpfungsleiste (11, 16, 19) ein Deformationsraum (13, 17, 21/ 22/ 23) für diese (11, 16, 19) ausgebildet ist, **dadurch gekennzeichnet, dass** die Abwinklung (9) oder/ und die Dämpfungsleiste (11, 16, 19) längsnutseitig zur Ausbildung des Deformationsraumes (13, 17, 21/ 22/ 23) im Querschnitt konkav ausgebildet ist.

2. Wischerblatt nach Anspruch 1, **dadurch gekennzeichnet, dass** der Deformationsraum (13, 17, 21/ 22/ 23) an der jeweiligen Abwinklung (9) oder/ und an der jeweiligen Dämpfungsleiste (11, 16, 19) ausgebildet ist.

3. Wischerblatt nach Anspruch 1 oder 2, **dadurch gekennzeichnet, dass** die Abwinklung (9) oder die Dämpfungsleiste (11, 16, 19) längsnutseitig im Bereich ihrer Außenkante einen längserstreckten Anlagesteg (12) oder eine Anlagewulst (20) für das jeweils andere Teil aufweist, die jeweils eine Mulde (13, 21) als Deformationsraum ausbildet.

4. Wischerblatt nach einem oder mehreren der vorhergehenden Ansprüche, **dadurch gekennzeichnet, dass** die Dämpfungsleiste (11, 19) nach dem Unterteil (3) zu geneigt ist und dabei mit dem Oberteil (1) einen Winkel von vorzugsweise 15 bis 25° einschließt.

5. Wischerblatt nach Anspruch 3, **dadurch gekennzeichnet, dass** der Anlagesteg (12) oder die Anlagewulst (20) aus einem Material mit einer wesentlich geringeren Shore-A-Härte als das Material der Wischleiste gebildet ist, insbesondere aus einem Material mit einer um die Hälfte geringeren Härte Shore A.

6. Wischerblatt nach Anspruch 5, **dadurch gekennzeichnet, dass** das Material des Anlagesteges (12) oder der Anlagewulst (20) weiches EPDM ist, das beim Extrudieren der Wischleiste coextrudiert wird.

7. Wischerblatt nach Anspruch 1, **dadurch gekennzeichnet, dass** das Hohlprofil (6) auf der der Wischlippe abgewandten Seite zu einem Windleitprofil (7) geformt ist.

## Claims

1. Wiper blade for a windscreen wiper, having a wiper strip, a resilient carrying element and a dimensionally stable hollow profile which encloses the carrying element at least partially, the wiper strip having an upper part with longitudinal grooves, a lower part, which is connected to the said upper part at least via a tilting web, with a wiping lip for bearing against a vehicle pane, and the hollow profile having two limbs on the wiping-lip side which are angled away towards the wiper strip and engage with the angled-away portions in each case into a longitudinal groove, a deformation space (13, 17, 21/22/23) for a damping strip (11, 16, 19) which delimits the respective longitudinal groove (10) on the wiping-lip side being formed between the respective angled-away portion (9) and the said damping strip (11, 16, 19), **characterized in that** the angled-away portion (9) and/or the damping strip (11, 16, 19) are/is configured with a concave cross section on the longitudinal-groove side in order to form the deformation space (13, 17, 21/22/23).

2. Wiper blade according to Claim 1, **characterized in that** the deformation space (13, 17, 21/22/23) is formed on the respective angled-away portion (9) and/or on the respective damping strip (11, 16, 19).

3. Wiper blade according to Claim 1 or 2, **characterized in that**, on the longitudinal-groove side in the region of its outer edge, the angled-away portion (9) or the damping strip (11, 16, 19) has an elongate contact web (12) or a contact bead (20) for the respectively other part, which in each case forms a recess (13, 21) as deformation space.

4. Wiper blade according to one or more of the preceding claims, **characterized in that** the damping strip (11, 19) is inclined towards the lower part (3) and in the process encloses an angle of preferably from 15 to 25° with the upper part (1).

5. Wiper blade according to Claim 3, **characterized in that** the contact web (12) or the contact bead (20) is formed from a material with a substantially lower Shore A hardness than the material of the wiper strip, in particular from a material with a Shore A hardness which is half as great.

6. Wiper blade according to Claim 5, **characterized in that** the material of the contact web (12) or the contact bead (20) is soft EPDM which is co-extruded during extrusion of the wiper strip.

7. Wiper blade according to Claim 1, **characterized in that** the hollow profile (6) is shaped to form a wind-guiding profile (7) on the side which faces away from the wiping lip.

## Revendications

1. Balai d'essuie-glace pour un essuie-glace, comportant une raclette d'essuie-glace, un élément de support élastique à ressort et un profilé creux à stabilité de forme entourant au moins en partie l'élément de support, la raclette d'essuie-glace comprenant une partie supérieure dotée de rainures longitudinales et une partie inférieure qui est reliée à celle-ci au moins par un élément jointif basculant et qui est dotée d'une lèvre de raclette d'essuie-glace pour l'appui sur une vitre de véhicule, et le profilé creux comprenant deux branches du côté de la lèvre de raclette d'essuie-glace qui sont coudées vers la raclette d'essuie-glace et qui s'emboîtent par les parties coudées à chaque fois dans une rainure longitudinale, un espace de déformation (13, 17, 21/22/23) pour une réglette d'amortissement (11, 16, 19) délimitant la rainure longitudinale (10) respective du côté de la lèvre de raclette d'essuie-glace étant réalisé entre la partie coudée (9) respective et cette réglette d'amortissement (11, 16, 19), **caractérisé en ce que** la partie coudée (9) et/ou la réglette d'amortissement (11, 16, 19) sont réalisées de manière concave en section transversale du côté de la rainure longitudinale en vue de la réalisation de l'espace de déformation (13, 17, 21/22/23).

2. Balai d'essuie-glace selon la revendication 1, **caractérisé en ce que** l'espace de déformation (13, 17, 21/22/23) est réalisé sur la partie coudée (9) respective et/ou sur la réglette d'amortissement (11, 16, 19) respective.

3. Balai d'essuie-glace selon la revendication 1 ou 2, **caractérisé en ce que** la partie coudée (9) ou la réglette d'amortissement (11, 16, 19) comprend du côté de la rainure longitudinale dans la région de son arête extérieure une nervure d'appui (12) s'étendant longitudinalement ou un bourrelet d'appui (20) pour l'autre partie respective, qui forme. à chaque fois un creux (13, 21) en tant qu'espace de déformation.

4. Balai d'essuie-glace selon l'une quelconque ou plusieurs des revendications précédentes, **caractérisé en ce que** la réglette d'amortissement (11, 19) est inclinée vers la partie inférieure (3) et forme ainsi avec la partie supérieure (1) un angle de préférence de 15 à 25°.

5. Balai d'essuie-glace selon la revendication 3, **caractérisé en ce que** la nervure d'appui (12) ou le bourrelet d'appui (20) sont formés d'un matériau dont la dureté Shore A est essentiellement inférieure à celle du matériau de la raclette d'essuie-glace, en particulier d'un matériau dont la dureté Shore A est inférieure de moitié.

6. Balai d'essuie-glace selon la revendication 5, **caractérisé en ce que** le matériau de la nervure d'appui (12) ou du bourrelet d'appui (20) est de l'EPDM souple qui est coextrudé lors de l'extrusion de la raclette d'essuie-glace.

7. Balai d'essuie-glace selon la revendication 1, **caractérisé en ce que** le profilé creux (6) est formé en un profilé aérodynamique (7) du côté opposé à la lèvre de raclette d'essuie-glace.
